Europäisches Patentamt

European Patent Office

Office européen des brevets

Veröffentlichungsnummer: **0 276 430**

**A1**

# EUROPÄISCHE PATENTANMELDUNG

(21) Anmeldenummer: 87118215.0

(22) Anmeldetag: 09.12.87

(51) Int. Cl.4 **C08L 61/06 , C08K 3/22 , C08J 9/14**

(30) Priorität: 24.12.86 DE 3644468

(43) Veröffentlichungstag der Anmeldung:
03.08.88 Patentblatt 88/31

(84) Benannte Vertragsstaaten:
**AT BE CH DE FR GB IT LI LU NL SE**

(71) Anmelder: **ISOBLOC GMBH**
**Karlstrasse 28**
**D-4055 Niederkrüchten(DE)**

Anmelder: **Hüls Troisdorf Aktiengesellschaft**
**Postfach 11 65**
**D-5210 Troisdorf(DE)**

(72) Erfinder: **Aust, Aloys**
**Karlstrasse 28**
**D-4055 Niederkrüchten(DE)**
Erfinder: **Tiroux, Josef**
**Im Zehntfeld 6**
**D-5210 Troisdorf(DE)**
Erfinder: **Weissenfels, Franz, Dr.**
**Am Grafenkreuz 17**
**D-5200 Siegburg(DE)**

(54) **Hochgefüllte Phenolharzschaumstoffe und deren Verwendung als Isolier-Formkörper.**

(57) Vorliegende Erfindung behandelt Hartschäume, die als Bindemittel aufgeschäumte und ausgehärtete Phenolharze aufweisen und bei denen über 90 % des Füllstoffs auf Aluminiumhydroxid entfallen. Der Anteil der Füllstoffe liegt über 100 %, bezogen auf den Harzgehalt der Schäume. Die zur Herstellung der Schäume eingesetzte schäumfähige, den Füllstoff enthaltende Masse ist gut fließfähig und kann direkt zur Herstellung von Formkörpern beliebiger Geometrie eingesetzt werden. Das eingesetzte Aluminiumhydroxid hat eine solche Korngrößenverteilung, daß zwischen 30 und 60 % des Füllstoffs im Korngrößenbereich unter 5 μm liegen. Die den Hartschaum enthaltenen Formkörper können auch als Verbundkörper ausgebildet sein. Sie zeichnen sich außer ihren guten Isolier-Eigenschaften durch erhöhte Druckfestigkeit, äußerst geringe Schrumpfneigung und eine außerordentlich hohe Feuerwiderstandsfähigkeit aus. Sie werden hauptsächlich im Bauwesen eingesetzt.

## Hochgefüllte Phenolharzschaumstoffe und deren Verwendung als Isolier-Formkörper

Gegenstand der vorliegenden Erfindung sind hochgefüllte Phenolharzschaumstoffe und ihre Verwendung als Isolier-Formkörper.

Es ist bekannt, bestimmten Phenolresolharzen Füllstoffe unterzumischen, so daß beim Aufschäumen dieser Gemische Hartschäume mit einem hohen Anteil an Füllstoffen erhalten werden. Es ist weiterhin bekannt, daß diese Schäume die Brandklasse A2 aufweisen können und sich im Baubereich zur Herstellung von Isolier-Formkörpern eignen (vgl. DE-PS 32 44 779).

Die Herstellung dieser bekannten Hartschäume stößt jedoch auf Schwierigkeiten, weil das dazu notwendige flüssige Phenolresolharz bereits bei einem Füllstoffgehalt von 250 Gew.-%, bezogen auf das flüssige Phenolresolharz, sich nur sehr - schwer aufschäumen läßt und man keine reproduzierbaren Ergebnisse erzielt.

Nachteilig bei diesen bekannten Hartschäumen wirkt sich weiterhin aus, daß diese Schäume eine ungenügende Druckfestigkeit besitzen, so daß ihr Einsatz im Bauwesen problematisch ist. Außerdem besitzen diese Schäume eine Schwindung von etwa 1 %, die ihren Einsatz bei Isolationen negativ beeinträchtigt.

Es bestand deshalb die Aufgabe, duroplastische Hartschäume aufzufinden, die einen Füllstoffanteil über 100 Gew.-%, bezogen auf den Harzanteil des Schaums, aufweisen und die als aufschäumbare Mischungen noch fließfähig sind, so daß sie sich leicht aufschäumen lassen. Weiterhin sollen die gesuchten Schäume Dichten zwischen 200 und 500 kg/m³ besitzen, möglichst keine Schwindung zeigen und eine höhere Druckfestigkeit als bekannte Duroplast-Hartschäume aufweisen.

In Erfüllung dieser Aufgabe wurden nun Hartschäume mit einem Füllstoffgehalt über 100 Gew.-%, bezogen auf den Harzgehalt des Schaums, die hergestellt werden durch Aufschäumen eines fließfähigen Gemischs aus Phenolresolharzen, Treibmitteln, Härtern und Füllstoffen, gefunden, die durch die kennzeichnenden Angaben des Anspruchs 1 gekennzeichnet sind.

Die erfindungsgemäßen Hartschäume besitzen Dichten von 200 bis 500 kg/m³, vorzugsweise von 250 bis 350 kg/m³. Sie lassen sich herstellen durch an sich bekanntes Aufschäumen von Phenolresolharzen, die neben den für das Aufschäumen und Aushärten an sich bekannten Härtern und Treibmitteln noch Füllstoffe in Mengen über 100 Gew.-%, bezogen auf das aufzuschäumende Phenolresolharz, enthalten. Diese Phenolresolharze sind trotz des hohen Anteils an Füllstoffen noch fließfähig.

Die erfindungsgemäßen Hartschäume besitzen mindestens gleich gute physikalische Eigenschaften wie die bekannten Hartschäume mit einem gleichen oder auch höheren Anteil an Füllstoffen. Sie erreichen ebenfalls die Brandklasse A2 gemäß DIN 4102: beim Verbrennen erzeugen sie praktisch keinen Qualm. Aufgrund ihres hohen Füllgrades übertreffen ihre mechanischen Eigenschaften, z.B. die Druckfestigkeit, noch diejenigen der bekannten duroplastischen Hartschäume. Weiterhin ist ihre Feuerwiderstandsfähigkeit außerordentlich gut und übertrifft diejenige der bekannten Duroplast-Hartschäume.

Die erfindungsgemäßen Hartschäume zeichnen sich weiterhin durch ein gutes Isolationsvermögen aus. Sie lassen sich deshalb vorzugweise als Isolier-Formkörper einsetzen. Dabei können diese Formkörper z.B. als Blöcke, Platten, Halbschalen oder Rohrummantelungen vorliegen. Solche Formkörper werden hauptsächlich im Bauwesen eingesetzt. Auch zu anderen Isolierkörpern, die im Bau-oder Sanitärwesen eingesetzt werden, lassen sich die erfindungsgemäßen Hartschäume in dazu geeigneter geometrischer Form verwenden.

Die Isolierkörper können auch in Form von Verbundkörpern vorliegen. Als möglicher Verbundwerkstoff seien dabei Holz, Metall oder Kunststoff genannt. In solchen Verbundmaterialien zeigt der erfindungsgemäße Schaum keine Schrumpfungen an den Nahtstellen Schaum/Verbundstoff. Es ist sogar möglich, in solchen Verbundkörpern - und auch bei der Herstellung der obengenannten Formkörper -der äußersten Schicht eine höhere Dichte als dem Kern zu geben. Diese Schicht ist in ihrer Stärke und Dichte steuerbar.

Die Körper aus dem Verbundwerkstoff sind ebenfalls Körper, die im Bauwesen eingesetzt werden, wie z.B. ummantelte Rohre, wobei der Schaum zwischen Ummantelung und Rohr angebracht ist, oder Körper, die im Sanitärbereich eingesetzt werden, wie z.B. Installations-Zellen.

Die Isolierung in den genannten Formkörpern wirkt z.B. gegen die Übertragung von Kälte, Wärme oder Schall.

Die zur Herstellung der erfindungsgemäßen Hartschäume eingesetzten Phenolresolharze sind an sich bekannte Harze, die durch alkalische Kondensation von Phenol und Formaldehyd erhalten werden. Die Kondensation wird dabei in an sich bekannter Weise so geführt, daß schäumfähige Phenolresolharze entstehen. Ein Zusatz von Furfurol oder Furfurylalkohol oder Furanharzen vor oder während der Kondensation erfolgt nicht. Das Resolharz ist frei von Furanverbindungen.

Das Aufschäumen erfolgt mit Hilfe von Treibmitteln und Härtern. Als Treibmittel eignen sich niedrigsiedende Kohlenwasserstoffe wie Pentan, Hexan oder Gemische dieser Kohlenwasserstoffe, die im Bereich zwischen 40 und 90 °C sieden. Auch Fluorkohlenwasserstoffe, die in diesem Temperaturbereich sieden, können als Treibmittel eingesetzt werden.

Der Anteil der Treibmittel in dem aufzuschäumenden Gemisch liegt zwischen 1 und 15 Gew.-%, bezogen auf das Phenolresolharz, vorzugsweise zwischen 2 und 5 Gew.-%.

Als Härter werden aromatische Sulfonsäuren, wie z.B. die Toluolsulfonsäuren, ggf. im Gemisch mit Schwefelsäure, eingesetzt. Die Menge des Härters liegt zwischen 10 und 25 Gew.-%, vorzugsweise zwischen 10 und 15 Gew.-%, bezogen auf das Phenolresolharz.

Das einzusetzende Aluminiumhydroxid muß möglichst feinkörnig sein; zumindest muß der Anteil der Feinbestandteile (Korngrößen unter 5,5 $\mu$m) zwischen 30 und 60 %, bezogen auf die gesamte Füllstoffmenge, betragen.

Der bevorzugte Füllstoff ist Aluminiumhydroxid in Form von Hydrargillit. Das Aluminiumhydroxid macht mindestens 90 % des Füllstoffanteils aus. Der verbleibende Anteil kann auf andere, an sich bekannte Feststoffe in Hartschäumen entfallen. Auch der gesamte Füllstoff kann aus Aluminiumhydroxid bestehen. Weiterhin können bis zu 10 % des Aluminiumhydroxids durch $SiO_2$ ersetzt sein.

## Beispiel

Es wird gemischt 1 kg Phenolresolharz (im Handel unter der Bezeichnung DYNAPOR [R] T 612 S3 von Dynamit Nobel AG, Troisdorf, erhältlich) mit 20 g n-Pentan, 1 200 g Aluminiumhydroxid im Korngrößenbereich von 2 bis 150 $\mu$m und 150 g eines Härters, bestehend aus einem Gemisch aus 40 Gew.-Teilen Toluolsulfonsäure, 20 Gew.-Teilen 96 %iger Schwefelsäure und 40 Gew.-Teilen Wasser. Das Gemisch wird anschließend in eine vorbereitete Holzform mit einem freien Volumen von 6 000 cm³ eingegossen. Nach Ablauf von 45 Minuten ist die Schäum-und Härterreaktion beendet. Der erhaltene Formkörper füllt die Form vollständig aus und kann nach dieser Zeit der Form entnommen werden.

Der Formkörper hat eine Dichte von 350 kg/m³. Seine Druckfestigkeit beträgt 21 kg/cm². Der Anteil an offenen Zellen beträgt 30 % (gemessen mit einem Beckmann Air-Comparison-Pyknometer). Seine Wärmeleitfähigkeit ($\lambda$ 24 °) beträgt 0,06 W/mK. Nach Lagerung bei 100 °C über 2 Tage lag die Volumenschwindung bei 0,3 %. Der Formkörper zeigte eine verdichtete Außenhaut von ca. 5 mm Dicke.

Eine aus dem Körper entnommene Platte von 20 mm Dicke zeigte eine Feuerwiderstandsdauer von 80 Minuten beim Behandeln mit der Flamme eines Bunsenbrenners und einer Oberflächentemperatur von ca. 1 100 °C.

## Ansprüche

1. Duroplast-Harz-Hartschaum mit einem Gehalt an Füllstoffen über 100 Gew.-%, bezogen auf den Harzgehalt des Schaums, hergestellt durch Aufschäumen eines fließfähigen Gemischs aus dem entsprechenden Resolharz, Treibmitteln, Härtern und Füllstoffen, **dadurch gekennzeichnet, daß**

a) als Resolharz ein furanfreies Phenolresolharz eingesetzt ist, das gehärtet wird durch Toluolsulfonsäure, der ggf. noch Schwefelsäure zugefügt ist,

b) mindestens 90 % der Füllstoffe auf Aluminiumhydroxid entfallen, das bis zu 10 % durch $SiO_2$ ersetzt sein kann,

c) das Aluminiumhydroxid einen Anteil des Korngrößenbereichs unter 5 $\mu$m zwischen 30 und 60 % aufweist.

2. Hartschaum gemäß Anspruch 1, dadurch gekennzeichnet, daß der Füllstoff Hydrargillit ist.

3. Verwendung eines Hartschaums gemäß Ansprüchen 1 oder 2 in Formkörpern, die eine in der Schichtstärke steuerbare, verdichtete Außenschicht aufweisen.

4. Verwendung eines Hartschaums gemäß einem der Ansprüche 1 bis 3 als Isolier-Formkörper mit verstärkter Außenschicht.

5. Verwendung eines Hartschaums als Isolier-Formkörper gemäß Anspruch 4 in schrumpffreien Verbundkörpern.

# EUROPÄISCHER RECHERCHENBERICHT

Nummer der Anmeldung

EP 87 11 8215

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-A-3 244 779 (RÜHL) <br> * Ansprüche 1-7 * <br> --- | 1 | C 08 L 61/06 <br> C 08 K 3/22 <br> C 08 J 9/14 |
| Y | GB-A-2 089 812 (MONSANTO) <br> * Ansprüche 1-5; Seite 1, Zeilen 43-49; Seite 2, Zeilen 9-35 * <br> --- | 1 | |
| A | FR-A-2 288 610 (MEDEVIELLE) <br> * Ansprüche 1-11; Seite 1, Zeilen 1-21 * <br> ----- | 3,4 | |

RECHERCHIERTE SACHGEBIETE (Int. Cl.4)

C 08 J
C 08 K
C 08 L

Der vorliegende Recherchenbericht wurde für alle Patentansprüche erstellt

| Recherchenort | Abschlußdatum der Recherche | Prüfer |
|---|---|---|
| DEN HAAG | 11-04-1988 | OUDOT R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)